# EUROPÄISCHE PATENTSCHRIFT

(11) **EP 2 242 713 B1**
(45) Veröffentlichungstag und Bekanntmachung des Hinweises auf die Patenterteilung: **18.07.2012**
(21) Anmeldenummer: 09713340.9
(22) Anmeldetag: 28.01.2009
(51) Int. Cl.: B65H 54/28, H02K 41/03

(54) **FADENFÜHRER AUF RÄDERN**
THREAD GUIDE ON WHEELS
GUIDE-FIL SUR ROUES

(30) Priorität: 21.02.2008 AT 2872008
(43) Veröffentlichungstag der Anmeldung: 27.10.2010
(73) Patentinhaber: Lunatone Industrielle Elektronik GmbH, 1220 Wien (AT); STARLINGER & CO. GESELLSCHAFT MBH, A-1060 Wien (AT)
(72) Erfinder: MAIR, Alexander, A-2285 Breitstetten (AT)
(74) Vertreter: Patentanwaltskanzlei Matschnig & Forsthuber OG
(86) Internationale Anmeldenummer: PCT/AT2009/000028
(87) Internationale Veröffentlichungsnummer: WO 2009/103095

(56) Entgegenhaltungen:
- WO-A1-02/098777
- JP-A- 58 033 964
- US-A- 4 868 431

## Beschreibung

Die Erfindung betrifft einen Fadenführer für eine Spuleinheit zum Aufspulen von Spulgut auf eine. Spule der Spuleinheit, wobei der Fadenführer während des Aufspulens eine Hin- und Herbewegung ausführt, und wobei der Fadenführer als Läufer eines elektrischen Linearmotors ausgebildet ist, wobei der Läufer auf zumindest einem Rad gelagert einem Stator gegenüber angeordnet ist, welcher Stator zur Erzeugung eines magnetischen Wanderfeldes vorgesehen ist, und wobei der Läufer zumindest einen Permanentmagneten umfasst, sodass sich der Läufer in dem Wanderfeld entlang des Stators bewegt.

Auch wenn in diesem Dokument von einem "Faden" bzw. einem "Faden"führer etc. die Rede ist, kann das Spulgut grundsätzlich jede beliebige Form aufweisen, solange es aufspulbar bleibt, es kann das Spulgut also fadenförmig, aber auch z.B. bändchenförmig sein.

Aus der EP 1 342 686 B1 ist eine Fadenführungsvorrichtung zum Aufnehmen gesponnener Garne auf Spulen, im Besonderen für Offenend-Spinnmaschinen bekannt. Die Vorrichtung weist eine Reihe von Fadenführern auf, welche mittels eines Antriebsmittels vor der zugeordneten Spule hin- und her bewegt werden können. Das Antriebsmittel ist dabei als Läufer eines elektrischen Linearmotors ausgebildet, wobei der Läufer einen magnetischen Balkenkörper aufweist und auf einem Stator, der einen Balkenkörper mit elektromagnetischen strombeaufschlagten Spulen aufweist, angeordnet ist. Durch Erzeugung eines variablen Magnetfeldes mit dem Stator kann der auf dem Stator beweglich angeordnete Läufer vor der Spule hin- und her bewegt werden.

Der Stator weist über seine gesamte Länge Rollenkörper mit horizontaler Achse auf, auf welchen sich der Läufer abstützt und sich mittels Rollreibung in Längsrichtung entlang dem Stator hin- und her bewegen kann.

Um hohe Geschwindigkeiten und insbesondere Beschleunigungen, wie sie beispielsweise beim Wickeln extrudierter Fäden notwendig sind, zu erreichen, ist eine oben beschriebene Vorrichtung allerdings ungeeignet, da die Anordnung aus einer Mehrzahl an Fadenführer schwer ist und andererseits eine Vielzahl an Rollenkörpern beschleunigt werden muss.

Ein Fadenführer für Aufspuleinrichtungen, welcher durch einen Linearmotor angetrieben wird, ist z.B. aus der EP 1148 016 A2 oder der DE 196 23 771 A1 bekannt. Der Fadenführer ist dabei direkt am Läufer des Motors befestigt. Weiters sind aus der WO 02098777, der JP 1160348 und der JP 2003214032 A Linearmotoren bekannt, bei welchen der Läufer auf Rädern gelagert ist, wobei der Läufer ein magnetisches Rückschlusselement, z.B. ein Element aus Weicheisen, enthält.

Es ist eine Aufgabe der Erfindung, einen Fadenführer mit einem konstruktiv einfachen Aufbau zu realisieren, bei welchem der Läufer stabil gelagert ist, und welcher mit hohen Geschwindigkeiten und Beschleunigungen bewegt werden kann.

Diese Aufgabe wir mit einem eingangs erwähnten Fadenführer dadurch gelöst, dass erfindungsgemäß oberhalb des Stators genau eine Schiene angeordnet ist, an welcher der Läufer mittels zumindest einem Rad gelagert ist.

Bei dem erfindungsgemäßen Fadenführer kann die Anzahl der Räder des Fadenführers gering gehalten werden. Während bei einer z.B. auf zwei Schienen aufgesetzten Variante wie aus dem Stand der Technik bekannt mindestens drei Räder notwendig sind, um den Läufer stabil zu lagern, sind bei dieser Variante zur stabilen Lagerung lediglich zwei Räder notwendig, wodurch sich das Gewicht des Läufers und die Herstellungskosten für den Fadenführer verringern lassen.

Durch den erfindungsgemäßen Aufbau mit wenigen Rädern lässt sich somit ein leichter Fadenführer realisieren, der schnell beschleunigbar ist und sich mit hoher Geschwindigkeit bewegen kann. Ein solcher Aufbau lässt sich außerdem konstruktiv relativ einfach und kostengünstig realisieren.

Außerdem kann sich der Fadenführer in Folge der Lagerung auf nur einer einzigen Schiene quer zur Bewegungsrichtung über dem Stator in der optimalen Position ausrichten, wodurch von den magnetischen Wanderfeld des Stators einerseits mehr Kraft auf den Fadenführer übertragen werden kann, andererseits keine axialen Belastungen in den Rädern und auf der Schiene auftreten bzw. diese stark reduziert werden können.

Zur Bildung eines magnetischen Rückschlusses umfasst der Läufer bei einer vorteilhaften Variante zumindest ein Rückschlusselement, welches bei einer Bewegung des Läufers mit diesem mitbewegt wird, sodass lediglich auf einer Seite ein Stator zur Erzeugung eines Wanderfeldes notwendig ist, wodurch der Luftspalte klein gehalten werden kann, da nur noch auf einer Seite ein solcher Luftspalt vorhanden ist. Dementsprechend kann auch das Magnetvolumen kleiner und entsprechend leichter gehalten werden, und es ergibt sich ein Fadenführer mit einem einfachen Aufbau, welcher mit hohen Geschwindigkeiten und Beschleunigungen bewegt werden kann.

Auf die Räder wirken in Folge des einseitigen Aufbaus (Stator nur auf einer Seite) hohe Kräfte, wodurch der Fadenführer auf der/den Schiene(n) bleibt und die Räder ausreichend stark gegen die Schiene(n) gedrückt werden, sodass unerwünschtes Gleiten, welches zu einer starken Abnutzung der Räder führen würde, verhindert werden kann. Kräftefreiheit auf die Räder ist bei der vorliegenden Erfindung nicht erwünscht.

Bei einer Ausführungsform der Erfindung ist vorgesehen, dass der Läufer mit genau einem Rad auf der einen Schiene gelagert ist und in Bewegungsrichtung vor und hinter dem einen Rad je zumindest eine Gleitstütze angeordnet ist Durch die Gleitstützen, welche z.B. auf der Schiene an deren Ober- oder Unterseite gleiten können, wird eine Verkippen des Läufers in oder entgegen seiner Bewegungsrichtung verhindert. Eine solche Variante mit genau einem Rad ist aus Gründen der Kosten- und Gewichtsersparnis bevorzugt.

Um eine in Bewegungsrichtung des Läufers besonders stabile Lagerung desselben zu ermöglichen, bei der ein zusätzliches Abstützen nicht notwendig ist, kann auch vorgesehen sein, dass der Läufer mit zwei oder mehr Rädern auf der einen Schiene gelagert ist. Die Räder sind dabei in Bewegungsrichtung hintereinander angeordnet und liegen auf einer Linie, wodurch ein Verkippen des Läufers in oder entgegen der Bewegungsrichtung, wie es bei einem Rad möglich wäre, verhindert wird. Aus Gründen der Kosten- und Gewichtsersparnis sind vorzugsweise genau 2 Räder vorgesehen.

Bei einer ersten Untervariante ist dabei der Läufer mittels des zumindest einen Rades auf der Schiene aufgesetzt gelagert. Unter "aufgesetzt" gelagert ist dabei zu verstehen, dass Teile des Läufers zu beiden Seiten der Schiene verlaufen, beispielsweise, dass das oder die Räder sowie die Schiene von zwei Wangen der Läufers seitlich umfasst und die Räder in diesen Wangen gelagert sind, sodass der Läufer gegen ein seitliches Verkippen gesichert ist.

Diese Variante erfordert eine exakte Fertigung und insbesondere Positionierung der Schiene, gewährleistet dann aber eine optimale Positionierung des Läufers oberhalb des Stators.

Bei einer anderen Untervariante ist der Läufer mittels des zumindest einen Rades auf der Schiene aufgehängt gelagert. Im Gegensatz zu der oben beschriebenen Ausgestaltung ist bei dieser Variante der Schwerpunkt der Masse des Läufers zwischen Schiene und Stator angeordnet, und nicht auf der von dem Stator abgewandten Seite der Schiene.

Die aufgehängte Variante hat den Vorteil, dass ein seitliches Bewegen des Läufers in einem gewissen Ausmaß möglich ist, wodurch z.B. der Läufer seine optimale Position oberhalb des Stators selbsttätig einstellen kann.

Bei beiden Untervarianten ist es für eine optimale Einstellung der Position vorerst wichtig, dass die Schiene mittig in Längsrichtung oberhalb des Stators verläuft.

Um die magnetischen Kräfte optimal ausnützen zu können, ist der zumindest eine Permanentmagnet vorzugsweise an der unteren, dem Stator zugewandten Seite des Läufers angeordnet.

Beispielsweise können das eine oder die mehreren Rückschlusselement(e) in einer Ebene mit dem einen oder den mehreren Permanentmagneten liegen. Bei einer anderen Anordndung ist ein Rückschlusselement (oder mehrere) oberhalb von den Permantmagneten angeordnet.

Insbesondere bei der aufgehängten Variante des Läufers kann es von Vorteil sein, wenn der eine oder die mehreren Permanentmagnete an der dem Stator zugewandten Seite in Ebenen normal auf die Bewegungsrichtung des Läufers eine von dem Stator weg gekrümmte Kontur aufweisen. Durch diese Ausgestaltung kann sich der Läufer in dem Magnetfeld noch besser ausrichten und der Abstand des Läufers zu dem Stator bleibt auch bei seitlicher Bewegung des Läufers konstant.

Besonders leicht kann der Läufer gestaltet werden, wenn er aus einem nicht-magnetischen Werkstoff, z.B. einem Kunststoff gebildet ist. Je geringer das Gewicht des Läufers ist, umso größere Beschleunigungen lassen sich damit realisieren, was insbesondere in den Umkehrpunkten des Läufers von Bedeutung ist, um hier den Moment des Stillstandes möglichst kurz halten zu können.

Eine stabile Anordnung der Permanentmagneten bzw. des oder Rückschlusselemente an dem Läufer kann dadurch erzielt werden, dass der Läufer eine oder mehrere Aufnahmen zum Aufnehmen des zumindest einen Permanentmagneten und/oder des zumindest einen Rückschlusselementes aufweist.

Alternativ oder zusätzlich können der zumindest eine Permanentmagnet und/oder das zumindest eine Rückschlusselement mit dem Läufer verklebt sein.

Bei einem aus Kunststoff gebildeten Läufer können der zumindest eine Permanentmagnet und/oder das zumindest eine Rückschlusselement in dem Läufer mitgespritzt sein, wodurch diese besonders stabil gehalten sind und sich ein einfacherer Fertigungsprozess mit weniger Arbeitsschritten erreichen lässt.

Es kann aber auch vorgesehen sein, dass im Wesentlichen der gesamte Läufer als Rückschlusselement ausgebildet ist. Der Läufer kann beispielsweise aus einem Eisenblech gebildet sein, was eine kostengünstige, aber gewichtsmäßig schwere Lösung darstellt. Ein solcher Läufer kann etwa dann zum Einsatz kommen, wenn das Gewicht keine Rolle spielt, wenn also ein schnelles Reversieren in den Umkehrpunkten nur von untergeordneter Bedeutung ist.

Weiters ist vorgesehen, dass das zumindest eine Rad Bestandteil der Läufers ist, d.h. die Räder sind an dem Läufer gelagert. Dies hat den Vorteil, dass nur wendige Räder verwendet werden müssen, während etwas bei Rollen, die von dem Läufer getrennt sind und welchen sich dieser bewegt, die gesamte Länge auf welcher sich der Läufer bewegen soll können mit Rollen versehen werden muss. Die erfindungsgemäße Lösung ist einfacher, billiger und es müssen nicht eine Vielzahl an Rollen auf in etwa die Geschwindigkeit des Läufers beschleunigt werden.

Die oben genannten Aufgabe wird außerdem auch noch mit einem Elektrischer Linearmotor für eine Spuleinheit zum Aufspulen von Spulgut auf eine Spule der Spuleinheit gelöst, welcher Linearmotor einen Stator zur Erzeugung eines magnetischen Wanderfeldes umfasst, und wobei erfindungsgemäß dem Stator gegenüber ein oben genannter Fadenführer angeordnet ist.

Eine besonders gute Selbstpositionierung eines aufgehängten Läufers ist gegeben, wenn der Stator an der dem Fadenführer zugewandten Seite in Ebenen normal auf die Bewegungsrichtung des Fadenführers eine zu dem Fadenführer hin gekrümmte Kontur aufweist.

Von Vorteil ist es, wenn der Läufer zumindest ein Rückschlusselement mitführt. Um das System zu optimieren und die magnetischen Kräfte auf den Läufer zu verringern und so die Kräfte auf die Radlager zu reduzieren, kann vorgesehen sein, dass bei dem Linearmotor zumindest ein weiteres Rückschlusselement feststehend, dem Stator gegenüber angeordnet ist, welches sich im Wesentlichen parallel zu dem Stator erstreckt, und wobei der Läufer zwischen dem Stator und dem zumindest einen weiteren, feststehenden Rückschlusselement bewegbar angeordnet ist. Ein Teil des Magnetfeldes wird somit von dem stehenden Rückschluss aufgenommen.

Schließlich betrifft die Erfindung noch eine Spuleinheit mit einem oben genannten elektrischen Linearmotor.

Im Folgenden ist die Erfindung an Hand der Zeichnung näher erläutert. In dieser zeigt
Fig. 1 schematisch eine perspektivische Darstellung einer Spulvorrichtung mit einem Fadenführer als Bestandteil eines Linearmotors,
Fig. 2 eine Variante der Erfindung mit einem auf eine Schiene aufgesetzten Fadenführer; und
Fig. 3 eine Variante der Erfindung mit einem auf einer Schiene hängend gelagerten Fadenführer.

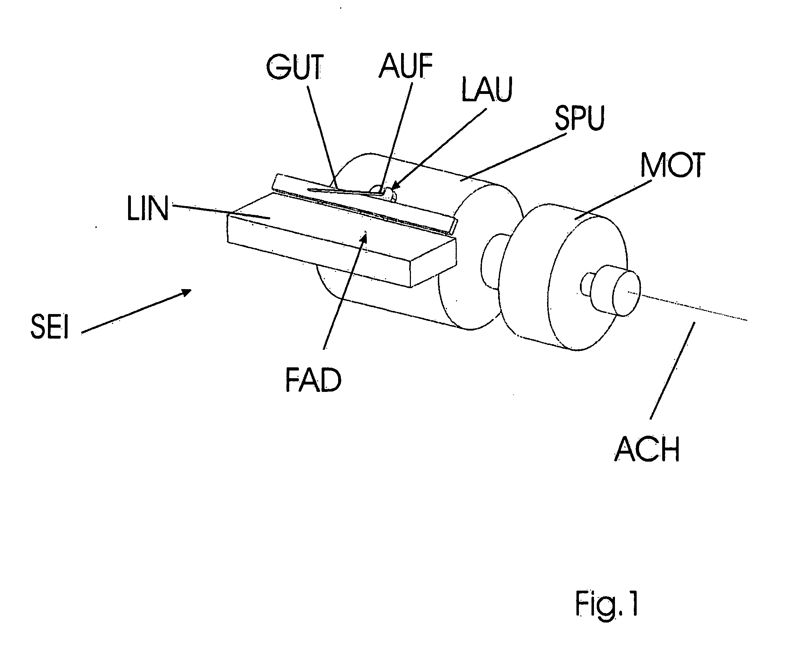

Figur 1 zeigt grob schematisch einen Fadenführer FAD für eine Spuleinheit SEI zum Aufspulen von beispielsweise fadenförmigem Spulgut GUT. Die Spuleinheit umfasst eine Spule SPU, auf welche das Spulgut GUT aufgespult wird. Dazu wird die Spule SPU mit einem Antrieb MOT, z.B. einem Spindelmotor um ihre Achse ACH gedreht. Angepasst an die Drehbewegung der Spule SPU führt der Fadenführer FAD das fadenförmige Spulgut GUT in einer Hin- und Herbewegung in bekannter Weise der Spule zu. Das Spulgut GUT ist dabei in einer Führungsaufnahme AUF an dem Fadenführer FAD geführt.

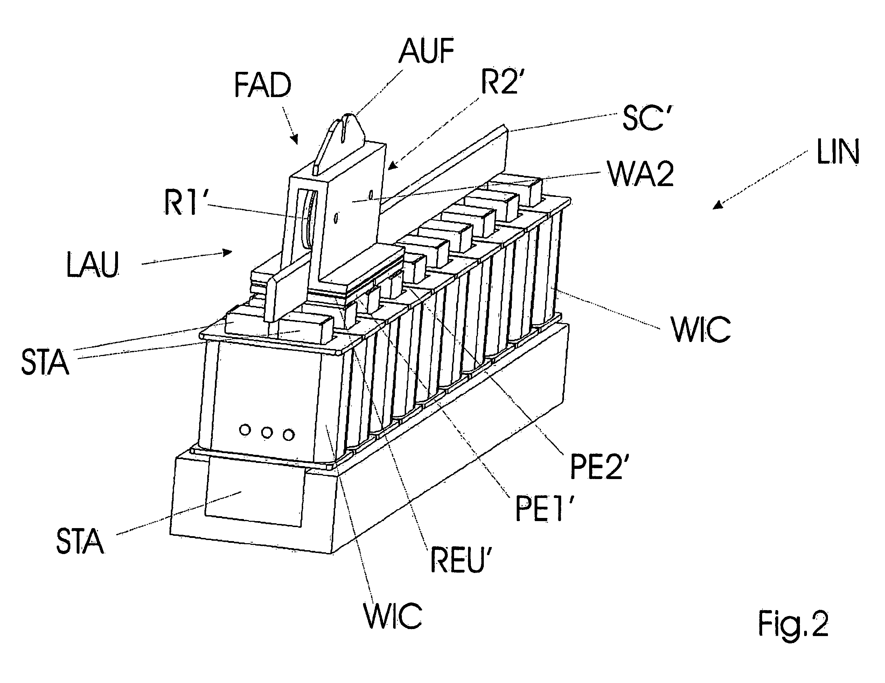

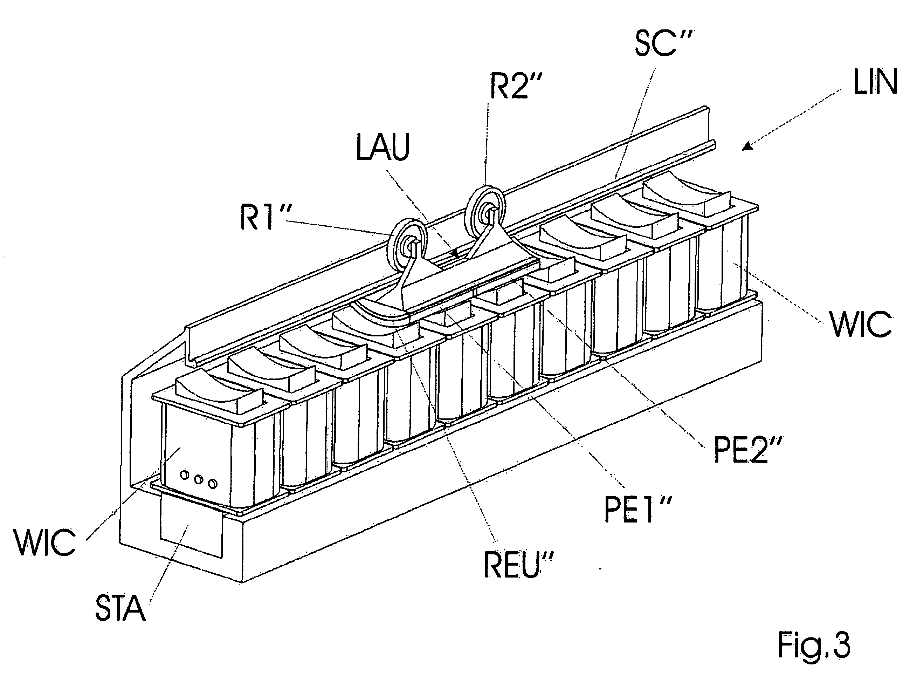

Wie nun insbesondere den Figuren 2 und 3 zu entnehmen ist, ist der Fadenführer FAD als Läufer LAU eines elektrischen Linearmotors LIN ausgebildet, wobei der Läufer LAU einem Stator STA, welcher Wicklungen/Spulen WIC zur Erzeugung eines magnetischen Wanderfeldes aufweist, gegenüberliegend mittels zumindest einem Rad R1', R2'; R1", R2" gelagert ist, wobei das Rad bzw. die Räder Bestandteil des Läufers sind, also an dem Läufer gelagert sind.

Das bzw. die Räder sind an dem Läufer beispielsweise mit Industrielagern gelagert, die Lager sollten leicht, staubdicht und für hohe Beschleunigungen ausgelegt sein.

Der Läufer LAU umfasst zumindest einen Permanentmagneten PE1', PE2', PE1", PE2", sodass sich der Läufer LAU in dem Wanderfeld entlang des Stators STA hin- und herbewegt.

Wie den Figuren 2 und 3 weiters zu entnehmen ist, umfasst der Läufer LAU zur Bildung eines magnetischen Rückschlusses ein Rückschlusselement REU', REU", welches bei einer Bewegung des Läufers LAU mit diesem mitbewegt wird. Ein solches Rückschlusselement besteht aus einem weichmagnetischen bzw. ferromagnetischen Material.

Bei der erfindungsgemäßem Ausgestaltung, wie sie in Figur 2 und 3 in unterschiedlichen Ausführungen gezeigt ist, ist oberhalb des Stators STA genau eine Schiene SC', SC" angeordnet, an welcher der Läufer LAU mittels zumindest eines Rades gelagert ist. Erfindungsgemäß ist lediglich eine Schiene vorgesehen und auch die Anzahl der Räder kann gering gehalten werden. Im Extremfall ist lediglich ein Rad notwendig, wodurch sich das Gewicht des Läufers und die Herstellungskosten für den Fadenführer verringern lassen, und mit zwei Rädern halten die magnetischen Kräfte den Läufer ohne weitere Hilfsmittel in einer stabilen Position.

Um eine in Bewegungsrichtung des Läufers besonders stabile Lagerung desselben zu ermöglichen, ist bei den Ausführungsformen nach Figur 2 oder 3 der Läufer LAU mit zwei Rädern R1', R2'; R1", R2" auf der einen Schiene SC', SC" gelagert. Die Räder R1', R2'; R1", R2" sind dabei in Bewegungsrichtung hintereinander abgeordnet, wodurch ein Verkippen des Läufers LAU verhindert wird. Aus Gründen der Kosten- und Gewichtsersparnis sind bei Varianten mit mehreren Rädern vorzugsweise genau 2 Räder vorgesehen.

Bei einer ersten Untervariante gemäß Figur 2 ist dabei der Läufer LAU mittels der beiden Räder R1', R2' auf der Schiene SC' aufgesetzt gelagert. Unter "aufgesetzt" gelagert ist dabei zu verstehen, dass Teile des Läufers LAU zu beiden Seiten der Schiene SC' verlaufen, beispielsweise, die Räder R1', R2' sowie die Schiene SC' wie gezeigt von zwei Wangen WA1, WA2 des Läufers LAU seitlich umfasst und die Räder R1', R2' in diesen Wangen gelagert sind, sodass der Läufer LAU gegen ein seitliches Verkippen gesichert ist.

Diese Variante erfordert eine exakte Fertigung und insbesondere Positionierung der Schiene SC', gewährleistet dann aber eine optimale Positionierung des Läufers oberhalb des Stators. Der Läufer LAU umfasst ein Rückschlusselement REU' und zwei Permanentmagnete PE1', PE2'.

Bei einer anderen Untervariante gemäß Figur 3 (Rückschlusselement REU", zwei Permanentmagnete PE1", PE2") ist der Läufer LAU mittels der Räder R1", R2" auf der Schiene SC" aufgehängt gelagert. Im Gegensatz zu der oben beschriebenen Ausgestaltung nach Figur 2 ist bei dieser Variante der Schwerpunkt der Masse des Läufers LAU zwischen Schiene SC" und Stator STA angeordnet, und nicht auf der von dem Stator abgewandten Seite der Schiene.

Die aufgehängte Variante hat den Vorteil, dass ein seitliches Bewegen des Läufers in einem gewissen Ausmaß möglich ist, wodurch z.B. der Läufer seine optimale Position oberhalb des Stators STA selbsttätig einstellen kann.

Bei beiden Varianten nach Figur 2 und 3 ist es für eine optimale Einstellung der Position der Läufers LAU vorerst wichtig, dass die Schiene SC', SC" mittig in Längsrichtung oberhalb des Stators STA verläuft.

Die Permanentmagnete PE1', PE2', PE1", PE2" sind bei allen gezeigten Varianten vorzugsweise an der unteren, dem Stator STA zugewandten Seite des Läufers LAU angeordnet.

Insbesondere bei der aufgehängten Variante des Läufers nach Figur 3 ist es günstig, wenn die Permanentmagneten PE1", PE2" an der dem Stator STA zugewandten Seite in Ebenen normal auf die Bewegungsrichtung des Läufers LAU eine von dem Stator STA weg gekrümmte Kontur aufweisen. Durch diese Ausgestaltung kann sich der Läufer LAU in dem Magnetfeld noch besser ausrichten und der Abstand des Läufers LAU zu dem Stator STA bleibt auch bei seitlicher Bewegung des Läufers konstant.

Eine besonders gute Selbstpositionierung eines aufgehängten Läufers ist dann gegeben, wenn alternativ oder insbesondere zusätzlich der Stator STA an der dem Fadenführer FAD zugewandten Seite in Ebenen normal auf die Bewegungsrichtung des Fadenführers FAD eine zu dem Fadenführer FAD hin gekrümmte Kontur aufweist.

Besonders leicht kann der Läufer LAU gestaltet werden, wenn er aus einem nicht-magnetischen Werkstoff, z.B. einem Kunststoff gebildet ist. Je geringer das Gewicht des Läufers ist, umso größere Beschleunigungen lassen sich damit realisieren, was insbesondere in den Umkehrpunkten des Läufers von Bedeutung ist, um hier den Moment des Stillstandes möglichst kurz halten zu können.

Eine stabile Anordnung der Permanentmagneten bzw. des oder Rückschlusselemente an dem Läufer kann dadurch erzielt werden, dass der Läufer LAU eine oder mehrere Aufnahmen zum Aufnehmen des zumindest einen Permanentmagneten und/oder des zumindest einen Rückschlusselementes aufweist.

Alternativ oder zusätzlich können der zumindest eine Permanentmagnet PE1', PE2', PE1", PE2" und/oder das zumindest eine Rückschlusselement REU', REU" mit dem Läufer LAU verklebt sein.

Bei einem aus Kunststoff gebildeten Läufer können der zumindest eine Permanentmagnet und/oder das zumindest eine Rückschlusselement in dem Läufer mitgespritzt sein, wodurch diese besonders stabil gehalten sind und sich ein einfacherer Fertigungsprozess mit weniger Arbeitsschritten erreichen lässt.

Wie aus den Figuren zu erkennen ist, befindet sich die Aufnahme AUF des Fadenführers FAD für das Spulgut GUT oberhalb der Schiene(n) und in einem oberen Bereich des Läufers LAU.

Die Aufnahme AUF für das Spulgut GUT kann aber genauso seitlich angeordnet sein.

Es kann aber auch die gesamte Vorrichtung wie in den Figuren gezeigt beispielsweise um 90° gekippt (z.B. um eine Achse parallel zu der Bewegungsrichtung des Läufers) angeordnet sein, sodass der Läufer dann nicht mehr oberhalb, sondern seitlich auf der bzw. den Schiene(n) läuft, wobei durch die starken Magnetkräfte ein Herunterfallen verhindert ist. Dementsprechend beziehen sich die Begriffe "oberhalb" bzw. "unterhalb" in dieser Anmeldung und in den Ansprüchen auf Anordnungen mit einer Ausrichtung wie in den Figuren gezeigt. Vom Schutz mit umfasst sind aber auch Anordnungen, bei denen der Läufer wie schon erwähnt seitlich neben der oder den Schienen läuft (beispielweise eine Anordnung wie in einer der Figuren 2 oder 3 nach links oder rechts gedreht, etwa um 90°; es sind aber auch Anordnungen, die um mehr als 90°, auch um 180° gegenüber der Darstellung in den Figuren verdreht sind, möglich und sinnvoll).

## Patentansprüche

1. Fadenführer (FAD) für eine Spuleinheit (SEI) zum Aufspulen von Spulgut (GUT) auf eine Spule (SPU) der Spuleinheit (SEI), wobei der Fadenführer (FAD) während des Aufspulens eine Hin- und Herbewegung ausführt, und wobei der Fadenführer (FAD) als Läufer (LAU) eines elektrischen Linearmotors (LIN) ausgebildet ist, wobei der Läufer (LAU) auf zumindest einem Rad (R1', R2'; R1", R2") gelagert einem Stator (STA) gegenüber angeordnet ist, welcher Stator (STA) zur Erzeugung eines magnetischen Wanderfeldes vorgesehen ist, und wobei der Läufer (LAU) zumindest einen Permanentmagneten (PE1', PE2', PE1", PE2") umfasst, sodass sich der Läufer (LAU) in dem Wanderfeld entlang des Stators (STA) bewegt,
**dadurch gekennzeichnet, dass**
oberhalb des Stators (STA) genau eine Schiene (SC', SC") angeordnet ist, an welcher der Läufer (LAU) mittels zumindest einem Rad (R1', R2'; R1", R2") gelagert ist.

2. Fadenführer nach Anspruch 1, **dadurch gekennzeichnet, dass** der Läufer (LAU) zur Bildung eines magnetischen Rückschlusses zumindest ein Rückschlusselement (REU', REU") umfasst, welches bei einer Bewegung des Läufers (LAU) mit diesem mitbewegt wird,

3. Fadenführer nach Anspruch 1 oder 2, **dadurch gekennzeichnet, dass** der Läufer mit genau einem Rad auf der einen Schiene gelagert ist und in Bewegungsrichtung vor und hinter dem einen Rad je zumindest eine Gleitstütze angeordnet ist.

4. Fadenführer nach Anspruch 1 oder 2, **dadurch gekennzeichnet, dass** der Läufer (LAU) mit zwei oder mehr Rädern (R1', R2'; R1", R2") auf der einen Schiene (SC', SC") gelagert ist.

5. Fadenführer nach einem der Ansprüche 1 bis 4, **dadurch gekennzeichnet, dass** der Läufer (LAU) mittels des zumindest einen Rades (R1', R2') auf der Schiene (SC') aufgesetzt gelagert ist.

6. Fadenführer nach einem der Ansprüche 1 bis 4, **dadurch gekennzeichnet, dass** der Läufer (LAU) mittels des zumindest einen Rades (R1", R2") auf der Schiene (SC") aufgehängt gelagert ist.

7. Fadenführer nach einem der Ansprüche 1 bis 6, **dadurch gekennzeichnet, dass** die Schiene (SC', SC") mittig in Längsrichtung oberhalb des Stators (STA) verläuft.

8. Fadenführer nach einem der Ansprüche 1 bis 7, **dadurch gekennzeichnet, dass** der zumindest eine Permanentmagnet (PE1', PE2', PE1", PE2") an der unteren, dem Stator (STA) zugewandten Seite des Läufers (LAU) angeordnet ist.

9. Fadenführer nach einem der Ansprüche 1 bis 8, **dadurch gekennzeichnet, dass** der eine oder die mehreren Permanentmagnete (PE1", PE2") an der dem Stator (STA) zugewandten Seite in Ebenen normal auf die Bewegungsrichtung des Läufers (LAU) eine von dem Stator (STA) weg gekrümmte Kontur aufweisen.

10. Fadenführer nach einem der Ansprüche 1 bis 9, **dadurch gekennzeichnet, dass** der Läufer (LAU) aus einem nicht-magnetischen Werkstoff gebildet ist.

11. Fadenführer nach einem der Ansprüche 1 bis 10, **dadurch gekennzeichnet, dass** der Läufer (LAU) eine oder mehrere Aufnahmen zum Aufnehmen des zumindest einen Permanentmagneten und/oder des zumindest einen Rückschlusselementes aufweist.

12. Fadenführer nach einem der Ansprüche 1 bis 11, **dadurch gekennzeichnet, dass** der zumindest eine Permanentmagnet (PE1', PE2', PE1", PE2") und/oder das zumindest eine Rückschlusselement (REU'; REU") mit dem Läufer (LAU) verklebt sind.

13. Fadenführer nach einem der Ansprüche 1 bis 12, **dadurch gekennzeichnet, dass** der Läufer aus einem Kunststoff gebildet ist und der zumindest eine Permanentmagnet und/oder das zumindest eine Rückschlusselement in dem Läufer mitgespritzt sind.

14. Fadenführer nach einem der Ansprüche 2 bis 12, **dadurch gekennzeichnet, dass** im Wesentlichen der gesamte Läufer als Rückschlusselement ausgebildet ist.

15. Fadenführer nach einem der Ansprüche 1 bis 14, **dadurch gekennzeichnet, dass** das zumindest eine Rad (R1', R2'; R1", R2") Bestandteil der Läufers (LAU) ist.

16. Elektrischer Linearmotor (LIN) für eine Spuleinheit (SEI) zum Aufspulen von Spulgut (GUT) auf eine Spule (SPU) der Spuleinheit (SEI), wobei der Linearmotor (LIN) einen Stator (STA) zur Erzeugung eines magnetischen Wanderfeldes umfasst, **dadurch gekennzeichnet, dass** dem Stator (STA) gegenüber ein als Bestandteil des Linearmotors gebauter Fadenführer (FAD) nach einem der Ansprüche 1 bis 15 angeordnet ist.

17. Linearmotor nach Anspruch 16 mit einem Fadenführer (FAD) nach einem der Ansprüche 5 bis 15, **dadurch gekennzeichnet, dass** der Stator (STA) an der dem Fadenführer (FAD) zugewandten Seite in Ebenen normal auf die Bewegungsrichtung des Fadenführers (FAD) eine zu dem Fadenführer (FAD) hin gekrümmte Kontur aufweist.

18. Linearmotor nach Anspruch 16 oder 17, **dadurch gekennzeichnet, dass** zumindest ein weiteres Rückschlusselement feststehend, dem Stator (STA) gegenüber angeordnet ist, welches sich im Wesentlichen parallel zu dem Stator (STA) erstreckt, und wobei der Läufer (LAU) zwischen dem Stator (STA) und dem zumindest einen weiteren, feststehenden Rückschlusselement bewegbar angeordnet ist.

19. Spuleinheit mit einem elektrischen Linearmotor nach einem der Ansprüche 16 bis 18.

## Claims

1. A thread guide (FAD) for a bobbin winder (SEI) for winding up winding material (GUT) onto a bobbin (SPU) of the bobbin winder (SEI), with the thread guide (FAD) performing a reciprocating movement during the winding, and with the thread guide (FAD) being arranged as the traveller (LAU) of an electric linear motor (LIN), with the traveller (LAU) being held on at least one wheel (R1', R2'; R1", R2") and arranged opposite of a stator (STA), which stator (STA) is provided for generating a travelling magnetic field, and with the traveller (LAU) comprising at least one permanent magnet (PE1', PE2', PE1", PE2"), so that the traveller (LAU) moves in the travelling field along the stator (STA), **characterized in that** precisely one rail (SC', SC") is arranged above the stator (STA), on which the traveller (LAU) is held by means of at least one wheel (R1', R2'; R1", R2").

2. A thread guide according to claim 1, **characterized in that** the traveller (LAU) comprises at least one magnetic return element (REU', REU") for forming a magnetic return, which return element is moved together with the traveller (LAU) during a movement thereof.

3. A thread guide according to claim 1 or 2, **characterized in that** the traveller is held with precisely one wheel on the rail and at least one respective sliding support is arranged in the direction of movement before and after the one wheel.

4. A thread guide according to claim 1 or 2, **characterized in that** the traveller (LAU) is held with two or more wheels (R1', R2'; R1", R2") on the one rail (SC', SC").

5. A thread guide according to one of the claims 1 to 4, **characterized in that** the traveller (LAU) is held by being placed on the rail (SC') by means of the at least one wheel (R1', R2').

6. A thread guide according to one of the claims 1 to 4, **characterized in that** the traveller (LAU) is held by being placed on the rail (SC") by means of the at least one wheel (R1" R2").

7. A thread guide according to one of the claims 1 to 6, **characterized in that** the rail (SC', SC") extends in the middle in the longitudinal direction above the stator (STA).

8. A thread guide according to one of the claims 1 to 7, **characterized in that** the at least one permanent magnet (PE1', PE2', PE1", PE2") is arranged on the bottom side of the traveller (LAU) facing the stator (STA).

9. A thread guide according to one of the claims 1 to 8, **characterized in that** on the side facing towards the stator (STA) in planes which are normal to the direction of movement of the traveller (LAU) the one or the several permanent magnets (PE1", PE2") have a shape curving away from the stator (STA).

10. A thread guide according to one of the claims 1 to 9, **characterized in that** the traveller (LAU) is made of a non-magnetic material.

11. A thread guide according to one of the claims 1 to 10, **characterized in that** the traveller (LAU) comprises one or several receivers for accommodating the at least one permanent magnet and/or the at least one magnetic return element.

12. A thread guide according to one of the claims 1 to 11, **characterized in that** the at least one permanent magnet (PE1', PE2', PE1", PE2") and/or the at least one magnetic return element (REU'; REU") are glued together with the traveller (LAU).

13. A thread guide according to one of the claims 1 to 12, **characterized in that** the traveller is made of a plastic material and the at least one permanent magnet and/or the at least one magnetic return element are co-injected into the traveller.

14. A thread guide according to one of the claims 2 to 12, **characterized in that** substantially the entire traveller is arranged as a magnetic return element.

15. A thread guide according to one of the claims 1 to 14, **characterized in that** the at least one wheel (R1', R2'; R1", R2") is a component of the traveller (LAU).

16. An electric linear motor (LIN) for a bobbin winder (SEI) for winding up winding material (GUT) onto a bobbin (SPU) of the bobbin winder (SEI), with the linear motor (LIN) comprising a stator (STA) for generating a travelling magnetic field, **characterized in that** a thread guide (FAD) according to one of the claims 1 to 15 which is constructed as a component of the linear motor is arranged opposite of the stator (STA).

17. A linear motor according to claim 16, comprising a thread guide (FAD) according to one of the claims 5 to 15, **characterized in that** on the side facing towards the thread guide (FAD) in planes which are normal to the direction of movement of the thread guide (FAD) the stator (STA) has a shape curving towards the thread guide (FAD).

18. A linear motor according to claim 16 or 17, **characterized in that** at least one further magnetic return element is arranged in a fixed manner opposite of the stator (STA), which magnetic return element extends substantially parallel to the stator (STA), and with the traveller (LAU) being movably arranged between the stator (STA) and the at least one further fixed magnetic return element.

19. A bobbin winder with an electric linear motor according to one of the claims 16 to 18.

## Revendications

1. Guide-fil (FAD) pour une unité de bobinage (SEI) destinée à bobiner un produit à bobiner (GUT) sur une bobine (SPU) de l'unité de bobinage (SEI), le guide-fil (FAD) effectuant un mouvement de va-et-vient pendant le bobinage et le guide-fil (FAD) prenant la forme d'un induit (LAU) d'un moteur électrique linéaire (LIN), l'induit (LAU) étant monté sur au moins une roue (R1', R2' ; R1", R2") en faisant face à un stator (STA), ledit stator (STA) étant prévu pour produire un champ d'ondes magnétiques progressives et l'induit (LAU) comprenant au moins un aimant permanent (PE1', PE2', PE1", PE2"), si bien que l'induit (LAU) se déplace le long du stator (STA) dans le champ d'ondes progressives,
**caractérisé par le fait que**
précisément un rail (SC', SC") est disposé au-dessus du stator (STA), sur lequel l'induit (LAU) est monté à l'aide d'au moins une roue (R1', R2' ; R1", R2").

2. Guide-fil selon la revendication 1, **caractérisé par le fait que** l'induit (LAU) comprend pour former un retour magnétique au moins un élément de retour magnétique (REU', REU") qui, lorsque l'induit (LAU) se déplace, est déplacé avec lui.

3. Guide-fil selon l'une des revendications 1 ou 2, **caractérisé par le fait que** l'induit est monté sur ledit rail à l'aide de précisément une roue et **par le fait qu'**au moins un patin glissant est disposé aussi bien en avant qu'en arrière de ladite une roue.

4. Guide-fil selon l'une des revendications 1 ou 2, **caractérisé par le fait que** l'induit (LAU) est monté par deux roues (R1', R2' ; R1", R2") ou plus sur ledit un rail (SC', SC").

5. Guide-fil selon l'une des revendications 1 à 4, **caractérisé par le fait que** l'induit (LAU) est monté sur le rail (SC') à l'aide de ladite au moins une roue (R1', R2').

6. Guide-fil selon l'une des revendications 1 à 4, **caractérisé par le fait que** l'induit (LAU) est monté sur le rail (SC") à l'aide de ladite au moins une roue (R1", R2").

7. Guide-fil selon l'une des revendications 1 à 6, **caractérisé par le fait que** le rail (SC', SC") est disposé au-dessus du stator (STA) en étant centré dans la direction longitudinale.

8. Guide-fil selon l'une des revendications 1 à 7, **caractérisé par le fait que** ledit au moins un aimant permanent (PE1', PE2', PE1", PE2") est disposé sur le côté inférieur de l'induit (LAU), tourné vers le stator (STA).

9. Guide-fil selon l'une des revendications 1 à 8, **caractérisé par le fait que** lesdits un ou plusieurs aimants permanents (PE1", PE2") présentent sur le côté tourné vers le stator (STA), dans des plans perpendiculaires à la direction de déplacement de l'induit (LAU), un contour recourbé en s'éloignant du stator (STA).

10. Guide-fil selon l'une des revendications 1 à 9, **caractérisé par le fait que** l'induit (LAU) est fabriqué dans un matériau non magnétique.

11. Guide-fil selon l'une des revendications 1 à 10, **caractérisé par le fait que** l'induit (LAU) possède un ou plusieurs logements destinés à recevoir ledit au moins un aimant permanent et/ou ledit au moins un élément de retour magnétique.

12. Guide-fil selon l'une des revendications 1 à 11, **caractérisé par le fait que** ledit au moins un aimant permanent (PE1', PE2', PE1", PE2") et/ou ledit au moins un élément de retour magnétique (REU', REU") sont collés sur l'induit (LAU).

13. Guide-fil selon l'une des revendications 1 à 12, **caractérisé par le fait que** l'induit est fabriqué dans une matière plastique et **par le fait que** ledit au moins un aimant permanent et/ou ledit au moins un élément de retour magnétique est co-injecté dans l'induit.

14. Guide-fil selon l'une des revendications 2 à 12, **caractérisé par le fait que**, essentiellement la totalité de l'induit joue le rôle d'élément de retour magnétique.

15. Guide-fil selon l'une des revendications 1 à 14, **caractérisé par le fait que** ladite au moins une roue (R1', R2' ; R1", R2") est un élément constitutif de l'induit (LAU).

16. Moteur électrique linéaire (LIN) pour une unité de bobinage (SEI) destinée à bobiner un produit à bobiner (GUT) sur une bobine (SPU) de l'unité de bobinage (SEI), le moteur linéaire (LIN) comprenant un stator (STA) destiné à produire un champ d'ondes magnétiques progressives, **caractérisé par le fait que** le stator (STA) est disposé en face d'un guide-fil (FAD) qui est un élément constitutif du moteur linéaire, selon l'une des revendications 1 à 15.

17. Moteur linéaire selon la revendication 16, avec un guide-fil (FAD) selon l'une des revendications 5 à 15, **caractérisé par le fait que** le stator (STA), sur la face tournée vers le guide-fil (FAD), porte dans des plans perpendiculaires à la direction de déplacement du guide-fil (FAD) un contour recourbé en s'éloignant du guide-fil (FAD).

18. Moteur linéaire selon l'une des revendications 16 ou 17, **caractérisé par le fait qu'**au moins un autre élément de retour magnétique est monté fixe, en faisant face au stator (STA) et en s'étendant de manière essentiellement parallèle au stator (STA), l'induit (LAU) étant monté mobile entre le stator (STA) et ledit au moins un autre élément de retour magnétique fixe.

19. Unité de bobinage avec un moteur électrique linéaire selon l'une des revendications 16 à 18.
